# EUROPEAN PATENT APPLICATION

(11) **EP 4 636 895 A1**
(43) Date of publication of application: **22.10.2025**
(21) Application number: 23949039.4
(22) Date of filing: 08.11.2023
(51) Int. Cl.: H01M 10/0585

(54) **SECONDARY BATTERY AND PREPARATION METHOD THEREFOR**

(30) Priority: 16.08.2023 CN 202311032817
(71) Applicant: Contemporary Amperex Technology Co., Limited, Ningde, Fujian 352100 (CN)
(72) Inventor: WANG, Weiwei, Ningde, Fujian 352100 (CN); HU, Bobing, Ningde, Fujian 352100 (CN)
(74) Representative: Ziebig Hengelhaupt Intellectual Property Attorneys Patentanwaltskanzlei PartGmbB
(86) International application number: PCT/CN2023/130468
(87) International publication number: WO 2025/035620

(57) **Abstract**

Provided in the present application are a secondary battery and a preparation method therefor. The secondary battery comprises a first electrode sheet, a second electrode sheet, and an insulating support part, wherein the first electrode sheet and the second electrode sheet are alternately stacked in a first direction to form a stack; the first electrode sheet is provided with extension parts extending outwards compared with the second electrode sheet, gap parts being formed between adjacent extension parts in the first direction; and the insulating support part comprises filling parts and covering parts, the filling parts filling the gap parts, and the covering parts covering the ends of the extension parts. The secondary battery of the present application ensures high safety.

## Description

### CROSS-REFERENCE TO RELATED APPLICATION

The present application is based on Chinese Patent Application No. 202311032817.2 filed on August 16, 2023, and claims the priority to this Chinese Patent Application, the content of which is incorporated herein by reference in its entirety.

### TECHNICAL FIELD

The present application relates to the technical field of batteries, and in particular, to a secondary battery and a preparation method therefor.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace. Secondary batteries have achieved great development, but current secondary batteries still pose potential safety hazards.

Therefore, improving the safety performance of secondary batteries has become an urgent issue that needs to be addressed in this field.

### SUMMARY

The present application is conducted in view of the above issues, and its objective is to provide a secondary battery with high safety and a preparation method therefor.

A first aspect of the present application provides a secondary battery. The secondary battery includes a first electrode plate, a second electrode plate, and an insulating support part, where the first electrode plate and the second electrode plate are alternately stacked along a first direction to form a stacked body; the first electrode plate is provided with an extension part extending to the outer side compared with the second electrode plate, and a gap part is formed between adjacent extension parts in the first direction; and the insulating support part includes a filling part and a covering part, where the filling part fills the gap part and the covering part covers an end part of the extension part.

Therefore, in the present application, by arranging the insulating support part on the extension part and the gap part in the electrode plate stacked body, the structural stability is greatly enhanced, thereby improving the safety of the battery.

In any of the embodiments, the filling part is connected to the covering part and fills the gap part, and optionally, the filling part fills up to an end part of the second electrode plate located in the gap part. By fully filling the gap part with the filling part, the structure is more stable and the battery safety is improved.

In any of the embodiments, the height of the filling part in the first direction is equal to the height of the gap part in the first direction. By fully filling the gap part with the filling part, the structure is more stable and the battery safety is improved.

In any of the embodiments, the covering part and the filling part are integrally formed. Therefore, the insulating support body is firmly arranged as a whole on the extension part and the gap part, thereby enhancing structural stability and improving battery safety.

In any of the embodiments, the covering part covers the entire stacked body along the first direction. Therefore, the pressure resistance of the insulating support body itself is stronger, thereby enhancing the structural stability of the battery stacked body and improving battery safety.

In any of the embodiments, the insulating support part is formed on the outer side of the stacked body and around the entire periphery of the stacked body. Therefore, the overall structural stability of the battery stacked body is further improved.

In any of the embodiments, the secondary battery includes N + 1 layers of the first electrode plate and N layers of the second electrode plate (N ≥ 1); a solid electrolyte film is arranged between the first electrode plate and the second electrode plate which are adjacent and stacked in the first direction; the first electrode plate is a negative electrode plate, and the second electrode plate is a positive electrode plate.

By arranging the insulating support part in the solid-state battery stacked body, the safety of the solid-state battery is improved.

In any of the embodiments, the stacked body on which the insulating support part is formed is subjected to a compression treatment. The compression treatment includes: applying pressure to each surface of the stacked body on which the insulating support part is formed, under a pressure greater than 0 Mpa and less than or equal to 1000 Mpa, optionally under a pressure of 50 Mpa to 1000 Mpa; and optionally, performing an isostatic pressing treatment on the stacked body on which the insulating support part is formed. Therefore, the solid-state battery can achieve both excellent safety and high volumetric energy density.

In any of the embodiments, the material of the insulating support part includes a polymer, and optionally, the glass transition temperature of the polymer is -30 °C to 200 °C. The polymer exhibits characteristics such as insulation and curability. By controlling conditions, the polymer can easily fill the gap part and cover the end part of the extension part, thereby achieving the effects of insulation and supporting the structure.

A second aspect of the present application further provides a preparation method for a secondary battery. The preparation method includes the following steps:
a stacking step: alternately stacking a first electrode plate and a second electrode plate in a first direction to form a stacked body, where the first electrode plate is provided with an extension part extending to the outer side compared with the second electrode plate, and a gap part is formed between adjacent extension parts in the first direction; and
a filling step: filling a polymer-containing slurry into the gap part and an end part of the extension part to form an insulating support part.

Through the preparation method, a secondary battery with strong structural stability and high safety can be obtained.

In any of the embodiments, before the stacking step, a negative electrode film layer is arranged on at least one surface of a negative electrode current collector to form the first electrode plate, and a positive electrode film layer is arranged on at least one surface of a positive electrode current collector to form the second electrode plate; a surface of the first electrode plate or the second electrode plate is coated with a solid-state electrolyte to form a solid electrolyte film. Therefore, a solid-state battery with strong structural stability and high safety can be obtained.

In any of the embodiments, in the filling step, the slurry is applied through an immersion method, a coating method, or an injection method. Through the filling method, the insulating support part can be formed.

In any of the embodiments, after the filling step, a compression step is further included: applying pressure to each surface of the stacked body on which the insulating support part is formed, under a pressure greater than 0 Mpa and less than or equal to 1000 Mpa, optionally under a pressure of 50 Mpa to 1000 Mpa; and optionally, performing an isostatic pressing treatment on the stacked body on which the insulating support part is formed. Through this step, the prepared solid-state battery can achieve both excellent safety and greatly improved volumetric energy density.

A third aspect of the present application provides an electric device. The electric device includes the secondary battery or a secondary battery obtained by the preparation method.

### ADVANTAGEOUS EFFECTS OF INVENTION

According to the present application, a secondary battery with high structural stability and excellent safety can be provided. Furthermore, according to the present disclosure, a solid-state battery with high safety and high volumetric energy density can be provided.

### BRIEF DESCRIPTION OF THE DRAWINGS

FIG. 1 is a partial schematic cross-sectional view of a secondary battery according to one embodiment of the present application.
FIG. 2 is a schematic cross-sectional view of a secondary battery according to one embodiment of the present application.
FIG. 3 is a schematic cross-sectional view of a secondary battery according to one embodiment of the present application.
FIG. 4 is a CT image of a solid-state battery according to Example 1 of the present application.
FIG. 5 is a photograph of a disassembled solid-state battery according to Comparative Example 1 of the present application.

### Description of the reference numerals:

1 first electrode plate; 11 extension part; 111 end part of the extension part; 2 second electrode plate; 3 insulating support part; 31 filling part; 32 covering part; 1' negative electrode; 1'a negative electrode current collector; 1'b negative electrode film layer; 2' positive electrode; 2'a positive electrode current collector; 2'b positive electrode film layer; 3' insulating support part.

### DETAILED DESCRIPTION

Hereinafter, embodiments of the secondary battery and the preparation method therefor of the present application are specifically disclosed in detail with appropriate reference to the drawings. However, unnecessary detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

Unless otherwise specified, all embodiments and optional embodiments of the present application can be combined with one another to form new technical solutions.

Unless otherwise specified, all technical features and optional technical features of the present application can be combined with one another to form new technical solutions.

At present, in an existing secondary battery, there exists a multi-layer electrode plate stacking structure formed by alternately stacking a first electrode plate and a second electrode plate. In the direction perpendicular to the stacking direction, overhang parts are formed at the end parts of the adjacent first electrode plates (that is, the first electrode plate extends to the outer side relative to the second electrode plate adjacent to the first electrode plate in the stacking direction, so that gaps are formed between the adjacent extension parts). This causes the extending electrode plates to be crushed and broken, exposing internal metal and leading to internal short circuits when the secondary battery is subjected to external forces such as impact or external pressure. This significantly reduces battery safety and even results in battery failure. In particular, this phenomenon frequently occurs during the process of battery preparation, resulting in poor manufacturability of the battery.

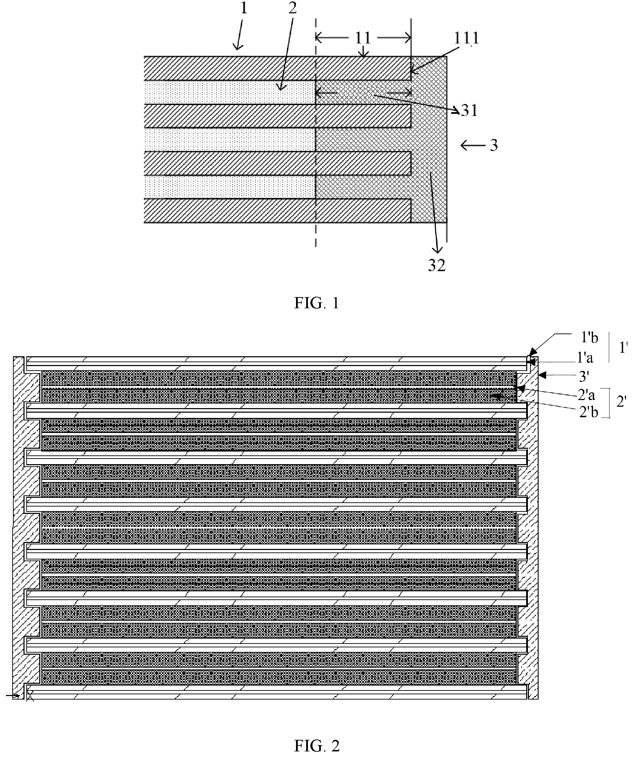

In view of the above conditions, a first aspect of the present application provides a secondary battery. As shown in FIG. 1, the secondary battery includes a first electrode plate 1, a second electrode plate 2, and an insulating support part 3. The first electrode plate 1 and the second electrode plate 2 are alternately stacked along the first direction, and the first electrode plate 1 is provided with an extension part 11 extending to the outer side compared with the second electrode plate 2. A gap part is formed between adjacent extension parts 11 in the first direction. The insulating support part 3 includes a filling part 31 and a covering part 32, the filling part 31 fills the gap part, and the covering part 32 covers the end part 111 of the extension part.

Here, the "first direction" refers to the stacking direction of the electrode plates, and the "outer side" refers to the outer side relative to the middle of the electrode plates.

The length of the extension part 11 (i.e. the length by which the first electrode plate 1 extends to the outer side compared with the second electrode plate 2) is less than 100 mm, optionally 0.5 mm to 10 mm, and optionally 1 mm to 6 mm.

In the secondary battery, the insulating support part 3 is arranged on the overhang part (the extension part and the gap part), so that the gap part is filled and the extension part 11 of the electrode plate is structurally reinforced, avoiding electrical conduction due to the breakage of the extension part 11 of the electrode plate (for example, when the first electrode plate 1 is a negative electrode, copper is exposed due to the breakage of the electrode plate). Meanwhile, the end part 111 of the extension part is covered, avoiding short circuits due to metal exposure in the end part 111. As a result, the structural stability is improved, and the safety of the battery is excellent.

In some embodiments, the filling part 31 is connected to the covering part 32 and fills the gap part. Optionally, the filling part 31 fills the gap part up to the end part of the second electrode plate 2 located in the gap part. The length of the filling part 31 in the second direction is equal to the length of the extension part 11. Here, the "second direction" refers to the direction perpendicular to the first direction. In some embodiments, the height of the filling part 31 in the first direction is equal to the height of the gap part in the first direction. Therefore, the filling part 31 fully fills the gap part, further reducing the risk of the extension part breaking due to the presence of the gap part, thereby making the structure more stable and improving battery safety.

In some embodiments, by integrally forming the covering part 32 and the filling part 31, the insulating support body 3 is firmly arranged as a whole on the extension part 11 and the gap part, thereby enhancing structural stability and improving battery safety.

In some embodiments, the covering part 32 covers the entire stacked body along the first direction. Optionally, the height of the covering part 32 in the first direction is equal to the stack thickness of the stacked body in the first direction. Optionally, the length of the covering part 32 in the second direction is greater than 0 mm and less than or equal to 10 mm, optionally 0.5 mm to 6 mm. Therefore, the pressure resistance of the insulating support body itself is stronger, thereby enhancing the structural stability of the battery stacked body.

In some embodiments, the insulating support part is formed on the outer side of the stacked body and around the entire periphery of the stacked body. For example, the electrode plates constituting the stacked body may be quadrilateral, circular, or other shapes. The insulating support part may be formed on the four side surfaces of the rectangular parallelepiped stacked body or on the entire circumferential surface of the cylindrical stacked body, that is, on the entire side surfaces of the stacked body except for the upper and lower surfaces in the stacking direction. Therefore, the overall structural stability of the battery stacked body is further improved.

In some embodiments, the material forming the insulating support part (the covering part + the filling part) may be any material that is insulating and can perform a structural supporting function. A material that can be cured under certain conditions may be adopted. For example, a material including a polymer may be used, and preferably, the glass transition temperature of the polymer is -30 °C to 200 °C, further preferably 80 °C to 120 °C. The polymer, for example, may be polyolefin such as polypropylene and polyethylene, polystyrene (PS), ethylene-vinyl acetate copolymer, epoxy resin, silicone rubber, polyurethane, polyacrylic acid, polyethylene terephthalate (PET), polyphenylene sulfide (PPS), polybutylene terephthalate (PBT) resin, and epoxy resin, and one or a mixture of a plurality of these polymers may be adopted. For a polymer-containing slurry, a hot-melt adhesive, a Kafuter AB adhesive, a glass prepreg, or the like is preferably adopted.

When the hot-melt adhesive is adopted, the insulating support part is a structural body formed after the hot-melt adhesive is cured, which exhibits certain viscosity and hardness and can fill the gap part and achieve the covering of the end part of the extension part. Meanwhile, the hot-melt adhesive also exhibits certain hardness, so that the structural strength can be enhanced, and the bending resistance is improved. The hot-melt adhesive used in the present application may be a conventional hot-melt adhesive, such as a polyethylene hot-melt adhesive, a polypropylene hot-melt adhesive, an ethylene and ethylene-copolymer-type hot-melt adhesive, a polyester hot-melt adhesive, and a polyamide hot-melt adhesive. Certainly, the hot-melt adhesive may also be a specially configured hot-melt adhesive, which is not limited in the embodiments of the present application.

In addition, for an existing solid-state battery, during the preparation process, it is difficult to tightly attach the solid-state electrolyte and the electrode plates under the conventional pressure (1 Mpa to 40 Mpa) during hot pressing. This results in an inability to achieve the compactness between the solid-state electrolyte and the electrode plates, leading to high overall resistance and low energy density of the battery. To increase the energy density, six-sided pressing is required under a pressure greater than 0 Mpa and less than or equal to 1000 Mpa, particularly under a pressure of 50 Mpa to 1000 Mpa after hot pressing. However, due to the presence of the overhang parts in the battery, which has poor structural stability, the extension part of the negative electrode extending to the outer side compared with the positive electrode is prone to breakage and copper exposure during six-sided pressing, especially during hot pressing of the side surfaces (surfaces except for the upper and lower surfaces in the stacking direction) of the stacked body. This can lead to short circuits of the battery cell, making battery preparation difficult and resulting in poor manufacturability of the battery.

In view of this, in some embodiments, following the stacking mode of the first electrode plate (the negative electrode plate)/the solid electrolyte film/the second electrode plate (the positive electrode plate)/the solid electrolyte film/the first electrode plate/the solid electrolyte film ...... the first electrode plate (the negative electrode plate), the solid electrolyte film is arranged between the first electrode plate (the negative electrode plate) and the second electrode plate (the positive electrode plate) that are adjacent to each other in the first direction, so as to form a stacked body. The stacked body includes N + 1 layers of negative electrode plates and N layers of positive electrode plates, where N ≥ 1.

By providing the solid-state battery of the present application with the insulating support part, the issue of copper exposure due to the breakage of the extension part of the negative electrode is effectively addressed. This improves the structural stability of the battery, avoids the risk of internal short circuits of the battery, and enhances the safety of the battery. Moreover, the manufacturability of the battery is improved, and the mass production of solid-state batteries is greatly promoted.

In some embodiments, the stacked body of the solid-state battery on which the insulating support part is formed is subjected to a compression treatment. The compression treatment includes: applying pressure to each surface of the stacked body on which the insulating support part is formed, under a pressure greater than 0 Mpa and less than or equal to 1000 Mpa, optionally under a pressure of 50 Mpa to 1000 Mpa; and optionally, performing an isostatic pressing treatment on the stacked body on which the insulating support part is formed.

The solid-state battery provided with the insulating support part exhibits strong structural stability, and copper exposure caused by the breakage of the extension part of the negative electrode can be avoided even if the solid-state battery is subjected to a compression treatment. Therefore, the solid-state battery not only exhibits excellent battery safety but also achieves a reduction in the battery volume after the compression treatment, leading to a substantial increase in the volumetric energy density of the battery.

The positive electrode plate may include a positive electrode current collector and a positive electrode film layer arranged on the positive electrode current collector and including a positive electrode active material. The type of the positive electrode active material is not particularly limited and can be selected based on actual needs.

Optionally, the positive electrode active material may be selected from one or more of LiFeₓ₁Mn_{y1}M_{z1}PO₄ (0 ≤ x1 ≤ 1, 0 ≤ y1 ≤ 1, 0 ≤ z1 ≤ 1, x1+ y1+ z1 = 1, M is selected from one or more of Al, Mg, Ga, Ti, Cr, Cu, Zn, and Mo), Li₃V₂(PO₄)₃, Li₃V₃(PO₄)₃, LiVPO₄F, LiNi_{0.5-x2}Mn_{1.5-y2}M'_{x2+y2}O₄ (-0.1 ≤ x2 ≤ 0.5, 0 ≤ y2 ≤ 1.5, M' is selected from one or more of Mn, Co, Fe, Al, Mg, Ca, Ti, Mo, Cr, Cu, and Zn), and Li1+x2Ni_{1-y2-z2}Co_{y2}M"_{z2}O₂ (M" is selected from one or more of Mn, Fe, Al, Mg, Ga, Ti, Cr, Cu, Zn, and Mo, -0.1≤ x2 ≤0.2, 0 ≤ y2 ≤ 1, 0 ≤ z2 ≤ 1, 0 ≤ y2 + z2 ≤ 1). Further preferably, the positive electrode active material is selected from one or more of LiFePO₄, LiMnPO₄, LiNiPO₄, LiCoPO₄, Li₃V₃(PO₄)₃, LiMn₂O₄, LiNi_{0.5}Mn_{1.5}O₄, LiCoO₂, LiNiO₂, LiCo_{1/3}Ni_{1/3}Mn_{1/3}O₂, LiNi_{0.8}Co_{0.1}Al_{0.1}O₂, and LiNi_{0.8}Co_{0.1}Mn_{0.1}O₂. When the positive electrode active material is the lithium-salt-based positive electrode active material, the corresponding negative electrode active material may be selected from one or more of graphite, soft carbon, hard carbon, silicon-carbon, lithium metal, and a lithium alloy.

Optionally, the positive electrode active material may be further selected from one or more of V₂O₅, MnO₂, TiS₂, FeS₂, SnS₂, and CuS₂. When the positive electrode active material is the non-lithium-salt-based positive electrode active material, a negative electrode active material that enables deintercalation of lithium ions, such as lithium metal or a lithium alloy, should be adopted as the corresponding negative electrode active material.

The positive electrode film layer may further include a conductive agent and a binder, and the types of the conductive agent and the binder are not particularly limited and can be selected based on actual needs.

The negative electrode plate may include a negative electrode current collector and a negative electrode film layer arranged on the negative electrode current collector and including a negative electrode active material. The type of the negative electrode active material is not particularly limited and can be selected based on actual needs. For example, the negative electrode active material may be a Si-based material, a silicon-carbon material, a mixture of carbon and alloy elements, lithium metal, a lithium alloy, graphite, hard carbon, or the like

The negative electrode film layer may further include a conductive agent and a binder, and the types of the conductive agent and the binder are not particularly limited and can be selected based on actual needs.

The solid-state electrolyte in the solid electrolyte film is not particularly limited in type as long as it is a solid-state electrolyte commonly used in solid-state batteries, and it can be selected based on actual needs. For example, the sulfide-based solid-state electrolyte described in CN111864256B may be used.

A second aspect of the present application provides a preparation method for a secondary battery. The preparation method includes the following steps:
In a stacking step, a first electrode plate and a second electrode plate are alternately stacked in the first direction to form a stacked body, the first electrode plate is provided with an extension part extending to the outer side compared with the second electrode plate, and a gap part is formed between adjacent extension parts in the first direction; and
in a filling step, a polymer-containing slurry is filled into the gap part and the end part of the extension part to form an insulating support part.

Through the preparation method, the issue of copper exposure due to the breakage of the extension part of the negative electrode is effectively addressed. This improves the structural stability of the battery, avoids the risk of internal short circuits of the battery, and enhances the safety of the battery. Meanwhile, the manufacturability of the battery is improved, and the mass production of solid-state batteries is greatly promoted.

In one embodiment, before the stacking step, a negative electrode film layer is arranged on at least one surface of the negative electrode current collector to form the first electrode plate, and a positive electrode film layer is arranged on at least one surface of the positive electrode current collector to form the second electrode plate; the surface of the first electrode plate or the second electrode plate is coated with a solid-state electrolyte to form a solid electrolyte film. Therefore, a solid-state battery with strong structural stability and high safety can be obtained.

In one embodiment, in the filling step, the filling method is not particularly limited as long as the slurry can be filled into the gap part. For example, an immersion method, a coating method, an injection method, or the like may be employed. As for the injection method, for example, a high-pressure adhesive-injection method may be employed after sealing the side edges of the secondary battery. This method can protect the battery cell and prevent the negative electrode from exposing copper and overlapping with the positive electrode. Alternatively, an adhesive-injection method for an entire hard-case cell may be employed, which can address the issue of impact damage in hard-case solid-state batteries.

In one embodiment, after the filling step, a compression step is further included, which involves applying pressure to each surface of the stacked body on which the insulating support part is formed, under a pressure greater than 0 Mpa and less than or equal to 1000 Mpa, optionally under a pressure of 50 Mpa to 1000 Mpa. Optionally, isostatic pressing is performed on the stacked body on which the insulating support part is formed. Optionally, a warm isostatic pressing treatment is performed on the stacked body on which the insulating support part is formed. The pressure, temperature, and time for the warm isostatic pressing are not particularly limited. For example, the pressure may be above 100 MPa and below 2000 MPa, above 10 °C and below 2000 °C, and above 5 seconds and below 6000 seconds. Through this step, the volume of the battery is reduced, and the volumetric energy density of the prepared solid-state battery can be substantially increased.

Hereinafter, the preparation method for a secondary battery according to the present application is described in detail. The preparation method includes the following steps.

### Preparation of Electrode Plate

In an environment with ambient humidity of 0.03% to 0.05% and -60 degc to -55 degc, the negative electrode active material (such as a silicon-based material or an M-C material (an alloy/a C material)), an additive, a conductive agent, a binder, and any other components are dispersed in a solvent (such as deionized water) to form a negative electrode slurry; two surfaces of a negative electrode current collector are coated with the negative electrode slurry to form negative electrode film layers, followed by drying, cold pressing, and other processes to obtain a negative electrode plate. The entire surface of the negative electrode film layer of the negative electrode plate is coated with a solid-state electrolyte (for example, a sulfide-based solid-state electrolyte) to form a solid electrolyte film. In addition, the positive electrode active material, the conductive agent, the binder, the lithium supplement agent, and any other components are dispersed in a solvent (such as N-methylpyrrolidone) to form a positive electrode slurry; two surfaces of a positive electrode current collector are coated with the positive electrode slurry to form positive electrode film layers, followed by drying, cold pressing, and other processes to obtain a positive electrode plate.

### Stacking

In an environment with ambient humidity of 0.03% to 0.05% and -60 degc to -55 degc, the negative electrode plate on which the solid electrolyte film is formed and the positive electrode plate are alternately stacked along the first direction to form a stacked body of the negative electrode plate/the solid electrolyte film/the positive electrode plate. The negative electrode extends to the outer side compared with the positive electrode, and the extension distance is greater than 2 mm, forming a gap between the adjacent negative electrodes in the stacking direction.

In addition, the entire surface of the positive electrode film layer of the positive electrode plate may also be coated with the solid-state electrolyte (for example, a sulfide-based solid-state electrolyte) to form a solid electrolyte film, and then the positive electrode plate on which the solid electrolyte film is formed and the negative electrode plate are alternately stacked in the first direction to form the stacked body.

### Hot Pressing

Next, in an environment with ambient humidity of 0.03% to 0.05% and -60 degc to - 55 degc, hot pressing is performed, and the hot pressing parameters are 6 Mpa to 8 Mpa, 85 °C to 95 °C, and 20 s to 130 s. Therefore, the solid-state battery maintains a relatively stable structure, avoiding electrode plate misalignment caused by looseness.

### Filling

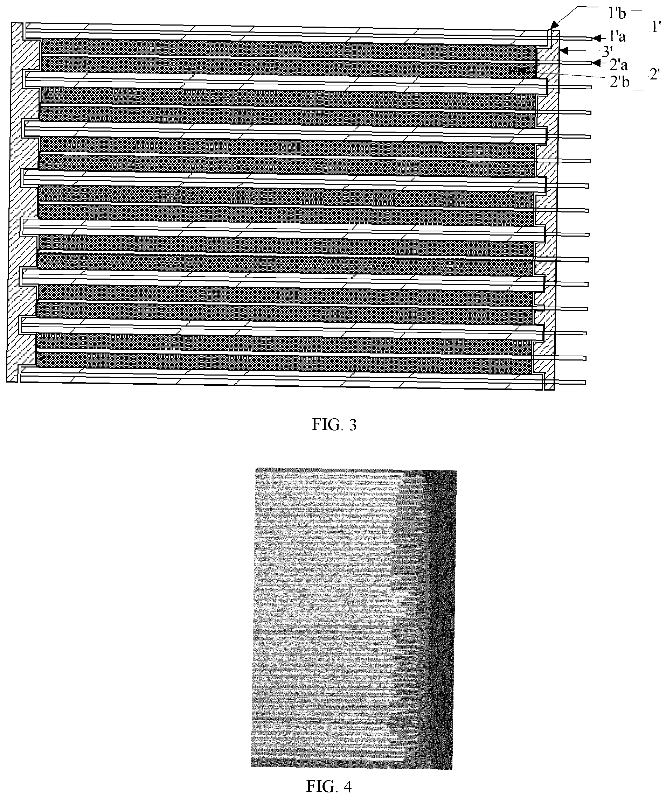

Next, in an environment with ambient humidity of 0.03% to 0.05% and -60 degc to - 55 degc, the stacked body is placed in an adhesive-injection mold. The adhesive-injection mold exceeds the outer contour of the battery cell by 1 mm to 10 mm on each single side. After sealing, a hot-melt adhesive (containing polyolefin, such as polypropylene or a mixture of polypropylene and other polymers) is injected, under an adhesive-injection pressure of 0.3 MPa to 0.6 MPa, at a temperature of 150 °C to 200 °C, and at a holding time of 5 s to 30 s. Then, cooling water is introduced into the water channel on the inner side of the adhesive-injection mechanism to cool for 10 s to 30 s, so that the hot-melt adhesive is rapidly cooled and hardened, and the gap part is filled and the end part of the extension part of the negative electrode is covered to form an insulating support part. FIGs. 2 and 3 are schematic cross-sectional views of the secondary battery.

Specifically, FIG. 2 is a schematic cross-sectional view along the width direction of the electrode plate, and FIG. 3 is a schematic cross-sectional view along the length direction of the electrode plate. As shown in FIGs. 2 and 3, a negative electrode film layer 1'b is formed on the surface of a negative electrode current collector 1'a, a solid electrolyte film (not shown) is formed on the surface of the negative electrode film layer 1'b, and a positive electrode film layer 2'b is formed on the surface of a positive electrode current collector 2'a. Negative electrode plates 1' and positive electrode plates 2' are alternately stacked, and an insulating support part 3' is formed on the outer side of the stacked body and around the entire periphery of the stacked body (i.e., respectively on both sides in the horizontal direction in the cross-sectional views of FIGs. 2 and 3) to fill the gaps between the adjacent negative electrode plates 1' and cover the end parts thereof. In FIG. 3, there exists an empty foil region on the negative electrode current collector 1'a where a negative electrode film layer 1'b is not formed. The part of the empty foil region proximal to the negative electrode film layer 1'b is covered by the insulating support part 3', and the part distal to the negative electrode film layer 1'b constitutes a negative electrode tab. Similarly, there exists an empty foil region on the positive electrode current collector 2'a where a positive electrode film layer 2'b is not formed. The part of the empty foil region proximal to the positive electrode film layer 2'b is covered by the insulating support part 3', and the part distal to the positive electrode film layer 2'b constitutes a negative electrode tab. Furthermore, the positive electrode tab and the negative electrode tab are located on the same side of the stacked body.

### Packaging

In an environment with ambient humidity of 0.03% to 0.05% and -60 degc to -55 degc, the aluminum-plastic film packaging is performed, followed by negative pressure evacuation and sealing to ensure that the solid-state battery is isolated from the environment.

### Compression

A warm isostatic pressing treatment is performed under an atmospheric environment. The parameters for warm isostatic pressing are as follows: pressure above 100 MPa and below 2000 MPa, 600MPa, temperature above 10 °C and below 2000 °C, and time above 5 seconds and below 6000 seconds. By performing six-sided pressing, the solid-state battery is obtained.

In addition, a third aspect of the present application provides an electric device. The electric device includes the secondary battery according to the present application or a secondary battery obtained by the preparation method according to the present application. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

### Examples

Hereinafter, examples of the present application are described. The examples described below are illustrative and are merely used to explain the present application, and they should not be construed as limiting the present application. The embodiments without techniques or conditions specified therein are implemented according to techniques or conditions described in the literature in the art or according to product instructions. Reagents or instruments used herein without specified manufacturers are all commercially available conventional products.

### Example 1

### (1) Electrode Plate

In an environment with ambient humidity of 0.04% and -60 degc, a negative electrode current collector (copper) was coated with a negative electrode slurry (the negative electrode active substance being a Si compound) to form a negative film layer, followed by drying and cold pressing to form a negative electrode plate. Then, the negative electrode film layer of the negative electrode plate was gravure-coated with a solid-state electrolyte (sulfide) to form a solid electrolyte film. In addition, a positive electrode current collector (aluminum foil) was coated with a positive electrode slurry (the positive electrode active substance being a high-nickel ternary material) to form a positive electrode film layer, followed by drying and cold pressing to form a positive electrode plate.

### (2) Stacking

In an environment with ambient humidity of 0.04% and -60 degc, alternating stacking was carried out using a stacking machine in the sequence of the negative electrode plate/the positive electrode plate/the negative electrode plate/the positive electrode plate/the negative electrode plate (each electrode plate being quadrilateral). After stacking, the extension length by which the extension part of the negative electrode plate extended to the outer side compared with the positive electrode plate was greater than 2 mm.

The obtained stacked body was sequentially provided with a negative electrode film layer (the active substance being a Si compound), part of a negative electrode current collector, a negative electrode film layer (the active substance being a Si compound), a solid-state electrolyte layer (sulfide), a positive electrode film layer (the active substance being a high-nickel ternary material), part of a positive electrode current collector, and a positive electrode film layer (the active substance being a high-nickel ternary material) from bottom to top.

### (3) Hot Pressing

In an environment with ambient humidity of 0.04% and -60 degc, hot pressing was performed. The hot pressing parameters were 7 Mpa, 90 °C, and 120 s, so that the solid-state battery obtained in step (2) maintained a relatively stable structure, avoiding electrode plate misalignment caused by looseness.

### (4) Filling

The solid-state battery after hot pressing was placed in an adhesive-injection mold. The adhesive-injection mold exceeds the outer contour of the solid-state battery by 1 mm on each side. After sealing, a hot-melt adhesive (polyolefin) was injected, under an adhesive-injection pressure of 0.5 Mpa, at a temperature of 200 °C, and at a holding time of 10 s. Then cooling water was introduced into the water channel on the inner side of the adhesive-injection mechanism for 10 s, so that the polyolefin was rapidly cooled and hardened to fill and fix the protruding portion of the negative electrode plate beyond the positive electrode plate, therefore, the insulating support part was formed on four side surfaces of the stacked body.

### (5) Packaging

In an environment with ambient humidity of 0.04% and -60 degc, the aluminum-plastic film packaging was then performed, followed by negative pressure evacuation and sealing to ensure that the solid-state battery was isolated from the environment.

### (6) Compression

Six-sided pressing was performed through a warm isostatic pressing machine (the warm isostatic pressing parameters being 600 Mpa, 90 °C, and 30 min) in an atmospheric environment to obtain the solid-state battery.

### Example 2

Except for using Kafuter AB adhesive instead of hot-melt adhesive, the preparation is conducted in the same manner as Example 1.

### Comparative Example 1

Except for omitting step (4) of filling, the same procedure as in Example 1 was conducted.

Next, the safety performance of all-solid-state batteries obtained in Examples and Comparative Example was evaluated.

The electrode plate stacked bodies of Examples 1 and 2 were scanned by CT at 150 KV and 120 uA with a cutting depth of 5 mm, and it was confirmed that none of the negative electrode plates were broken. FIG. 4 is a CT image of a solid-state battery according to Example 1. As can be seen from FIG. 4, the hot-melt adhesive fills the gap parts and covers the end parts of the extension parts of the negative electrodes, and the electrode plates were not broken, ensuring good battery safety. Furthermore, the solid-state batteries of Examples were disassembled, and it was reconfirmed again that no electrode plates were broken.

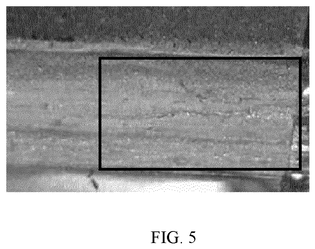

In addition, the solid-state battery of Comparative Example 1 was disassembled, and it was confirmed that electrode plates were broken, and copper exposure and overlapping occurred. The disassembled part was photographed with a digital camera, and the photograph obtained is shown in FIG. 5. In the area indicated by the black frame in FIG. 5, copper leakage occurred and a short circuit occurred inside the battery.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A secondary battery, comprising a first electrode plate, a second electrode plate, and an insulating support part,
wherein the first electrode plate and the second electrode plate are alternately stacked along a first direction to form a stacked body;
the first electrode plate is provided with an extension part extending to an outer side compared with the second electrode plate, and a gap part is formed between adjacent extension parts in the first direction; and
the insulating support part comprises a filling part and a covering part, wherein the filling part fills the gap part and the covering part covers an end part of the extension part.

2. The secondary battery according to claim 1, wherein
the filling part is connected to the covering part and fills the gap part, and
optionally, the filling part fills up to an end part of the second electrode plate located in the gap part.

3. The secondary battery according to claim 1 or 2, wherein
a height of the filling part in the first direction is equal to a height of the gap part in the first direction.

4. The secondary battery according to any one of claims 1 to 3, wherein
the covering part and the filling part are integrally formed.

5. The secondary battery according to any one of claims 1 to 4, wherein
the covering part covers the entire stacked body along the first direction.

6. The secondary battery according to any one of claims 1 to 5, wherein
the insulating support part is formed on an outer side of the stacked body and around an entire periphery of the stacked body.

7. The secondary battery according to any one of claims 1 to 6, wherein
the secondary battery comprises N + 1 layers of the first electrode plate and N layers of the second electrode plate, with N ≥ 1;
a solid electrolyte film is arranged between the first electrode plate and the second electrode plate which are adjacent and stacked in the first direction; and
the first electrode plate is a negative electrode plate, and the second electrode plate is a positive electrode plate.

8. The secondary battery according to claim 7, wherein
the stacked body on which the insulating support part is formed is subjected to a compression treatment, wherein
the compression treatment comprises: applying pressure to each surface of the stacked body on which the insulating support part is formed, under a pressure greater than 0 Mpa and less than or equal to 1000 Mpa, optionally under a pressure of 50 Mpa to 1000 Mpa; and optionally, performing an isostatic pressing treatment on the stacked body on which the insulating support part is formed.

9. The secondary battery according to any one of claims 1 to 8, wherein
a material of the insulating support part comprises a polymer, and
optionally, a glass transition temperature of the polymer is -30 °C to 200 °C.

10. A preparation method for a secondary battery, comprising the following steps:
a stacking step: alternately stacking a first electrode plate and a second electrode plate in a first direction to form a stacked body, wherein the first electrode plate is provided with an extension part extending to an outer side compared with the second electrode plate, and a gap part is formed between adjacent extension parts in the first direction; and
a filling step: filling a polymer-containing slurry into the gap part and an end part of the extension part to form an insulating support part.

11. The preparation method according to claim 10, wherein
before the stacking step, a negative electrode film layer is arranged on at least one surface of a negative electrode current collector to form the first electrode plate, and a positive electrode film layer is arranged on at least one surface of a positive electrode current collector to form the second electrode plate; a surface of the first electrode plate or the second electrode plate is coated with a solid-state electrolyte to form a solid electrolyte film.

12. The preparation method according to claim 10 or 11, wherein
in the filling step, the slurry is applied through an immersion method, a coating method, or an injection method.

13. The preparation method according to any one of claims 10 to 12, wherein after the filling step, a compression step is further comprised:
applying pressure to each surface of the stacked body on which the insulating support part is formed, under a pressure greater than 0 Mpa and less than or equal to 1000 Mpa, optionally under a pressure of 50 Mpa to 1000 Mpa; and optionally, performing an isostatic pressing treatment on the stacked body on which the insulating support part is formed.

14. An electric device, comprising the secondary battery according to any one of claims 1 to 9 or a secondary battery obtained by the preparation method according to any one of claims 10 to 13.
